# EUROPÄISCHE PATENTANMELDUNG

(11) **EP 0 810 376 A1**
(43) Veröffentlichungstag der Anmeldung: **03.12.1997**
(21) Anmeldenummer: 96108708.7
(22) Anmeldetag: 31.05.1996
(51) Int. Cl.: F16B 5/02, F16B 25/00

(54) **Spezialschraube für Distanzmontagen**

(71) Anmelder: Einsiedler, Helmut, D-79736 Rickenbach (DE)
(72) Erfinder: Einsiedler, Helmut, 79736 Rickenbach (DE)
(74) Vertreter: Termin, Erich

(57) **Zusammenfassung**

Die Erfindung betrifft eine Schraube S, zur Montage von Gegenständen auf Distanz zueinander, den sogenannten Eindringgegenständen 6 und den Komplementärgegenständen 5, die mittels der Schraube S verbunden und fixiert werden, wobei die Schraube S auf der gesamten Schraubenlänge ein Gewinde mit der gleichen Gewinsteigung besitzt, mit einer wie im Metallbereich üblichen Gewindeart mit enger Gewindesteigung, unterteilt in einen verjüngten, vorderen Gewindebereich a und einen hinteren Gewindebereich b, mit einem vertieft ausgeprägten Gewindeprofil,

## Beschreibung

Gegenstand der Erfindung ist eine spezielle Schraube zur Befestigung von Gegenständen untereinander auf Distanz. Die Distanz zwischen den zu befestigenden Gegenständen, meist flächenartigen Gebilden untereinander oder flächenartiger Gebilde und Montagegerüsten, ist aus verschiedenen Zweckgründen gewollt. Meist wird ein exaktes Distanzniveau zwischen den zu befestigenden Gegenständen gefordert. Diese Distanznivelierung der Gegenstände, vor deren Montage untereinander, erfordert ein erhebliches handwerkliches Können und vor allem einen nicht unerheblichen Zeitaufwand. Müssen doch die Gegenstände distanzmässig verkeilt und unterlegt werden, um die zur Montage erforderlichen Bohr- und Gewindeschneidarbeiten so durchführen zu können, dass das nachfolgende Zusammenschrauben der zu montierenden Gegenstände so erfolgen kann, dass eine stabile Verbindung der montierten Gegenstände entsteht. Da die verwendeten Hinzu kommt dass die üblichen Versenkkopfschrauben, nach der Distanzmontage der zu montierenden Gegenstände, auf Zug, mittels einer Mutter am Schraubenende gesichert werden müßen und die vorher angebrachte Distanzverhölzelung (Schiftung) beibehalten bleibt.

Anwendungsbeispiele für Distanzmontagen sind der Waggoninnenausbau und sonstige Verkleidungs- und Zwischenwandmontagen beim Abdecken von Versorgungs- und Infrastruktureinrichtungen.

Beim Basisgegenstand handelt es sich meist um gerüstartige, oft, nichtniveaugleiche Gebilde. Beim Verkleidungsgegenstand dagegen meist um flächenartige, dreidimen sionale Gebilde. Herausgegriffene Anwendungsbeispiele für Distanzmontagen sind insbesondere, der Innenausbau, speziell von rollendem Material im Bereich des Verkehrswesens, wie des Schienenfahrzeugbaus, des Flugzeug- oder Wasserfahrzeugbaus, sowie im Bereich des Laborbaus, der Ausgestaltung im Bereich von Mess- und Regeltechnikstationen und generell im Bereich der Zwischenwanderstellung und der Verkleidungen der verschiedenen Art.
Problematisch ist der angesprochene Anwendungsbereich vor allem deshalb, weil die zu montierenden Gegenstände meist aus verschiedenartigen Materialien bestehen. So besteht das Basismaterial, im weiteren Eindringmaterial 6 genannt, in der Regel aus härteren Materialien als Holz, zum Beispiel aus Aluminium, Messing,Stahl, aus Duro- oder Thermoplastpolymermaterial, wie ABS (Acrylntril-Butadien-Styrol), Polypropylen oder Polyamid, oder aus anderen Metallersatzstoffen, wie laminiertem Verbundpressholz, wie zum Beispiel Multiplex.
Das Verkleidungsmaterial besteht meist aus Laminatpressholz, Holzpolymerverbundmaterialien oder Polymerflächengebilden. In der Regel bestehen diese Gebilde aus weicheren Materialien als die Eindringmaterialien.
Die stark differierenden Materialeigenschaften, der erfindungsgemäss auf Distanz zu verbindenden Gegenstände, stellen ganz besondere, spezifische Anforderungen an die zu verwendenden Verbindungselemente. Im Falle von Schrauben, als Verbindungselemente, ist es besonders wichtig, dass die Montage der zu verbindenden Gegenstände derart erfolgt, dass kein Bewegungsspielraum im Verbundsystem vorhanden ist. Bei bewegten Gegenständen, wie zum Beispiel im Verkehrsfahrzeugbau, würde es sonst zum sogenannten 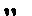 Ausleiern" kommen und in der Folge, zu Reparaturen. Des weiteren werden insbesondere extrem verlässliche Anforderungen an die Reisswerte bei der Distanzverbindung der Gegenstände mittels Schrauben an das Schraubenmaterial gestellt. Einzige Lösung zur Überwindung des Reisswertproblems war bisher die Sicherung der Schrauben mittels Schraubenmuttern. Diese Art der Sicherung der Distanzmontageverbindungen hat jedoch einen gravierenden Nachteil. Oft kommt es nämlich vor, dass der Montagezwischenraum sehr gering ist und dadurch für manuelle Arbeitsweisen eingegrenzt und hinderlich. Nicht selten wird das Eindringmaterial durch den Verkleidungsgegenstand abgedeckt. Dadurch entsteht dann ein Hohlraum der zum Zwecke der Anbringung einer Sicherungsmutter überhaupt nicht mehr zugänglich ist. In solchen Fällen ist die bekannte Distanzmontageart unter der Anwendung von Schrauben mit Schraubenmutterabsicherung völlig ausgeschlossen.
Das zu überwindende Hauptproblem, der beschriebenen speziellen Distanzmontagen, ist somit das Problem der dauerhaften, spielraumfreien Verbindung der vorgenannten Montageteile, mittels Schrauben, dem ökonomischsten Verbindungselement.
Da die Verkleidungselemente in der Regel aus einem dickwandigeren und weicheren Material, als dem Eindringmaterial, bestehen, muß, um die geforderten Ausreisswerte zu erreichen, die griffige Schraubenverankerung im Verkleidungsmaterial nachhaltig verbessert werden, wenn eine Schraube eingesetzt werden soll, die ohne Sicherungsmutter auskommt. Darüberhinaus muß die Schraube im Fußbereich exzelente Eindring- und Gewindeschneideigenschaften besitzen, wenn sie sich, im in der Regel härteren Eindringmaterial verankern soll.
Da für die weicheren Verkleidungselemente,um höhere Ausreisswerte zu erlangen, an eine Ausweitung des Schraubenkopfes, zwecks Erhöhung der Verankerungslänge im Material, gedacht ist, drängt sich die Anwendung einer Zweistufenschraube auf.
Solche Zweistufenschrauben sind zwar aus der BE-A-0 319 812, der EP-A-0 267 153 und der EP-A-0 314 950 bekannt. Allesamt beziehen sich diese Zitate jedoch auf wenig anspruchsvolle Anwendungsbereiche, insbesondere bei den Montageverbindungen zwischen Holz mit Holz und in nichtbeweglichen Montageobjekten, wie zum Beispiel der Montage von Türzargen und Fensterrahmen. Die in den Zitaten gezeigten Gewindearten sind Holzgewinde, die beim Eindrehen ins Holz überwiegend einen Quetscheffekt ausüben. Die Ausreisswerte sind bei derartigen Montageverbindungen nur unzureichend, stellen jedoch auch kein Kriterium dar, da bei den Anwendungsbereichen keine Schüttel- und Rütteleffekte zu bewältigen.
Aufgabe der Erfindung ist es, eine Schraube für Distanzmontagen, auf der Basis einer abgestuften Durchmesserbasis, mit verjüngtem Schraubenfuß, derart zu entwickeln,dass die Schraube universell einsetzbar ist, auch in Fällen der Raumunzulänglichkeiten und die, ohne mit einer Sicherungsmutter abgesichert zu werden, Ausreisswerte aufweist, die inetwa denen gleichkommen, die nur mit Schrauben erzielt werden, die einen überstehenden Schraubenkopf besitzen und die nach der Montage, mittels Schraubenmutter am Verankerungsende des Eindringmaterials abgesichert werden.
Die neue Schraube soll insbesondere auch für den Einsatz bei metallischen Eindringgegenständen geeignet sein und da sie oft im dekorativen Verkleidungsbereich eingesetzt wird soll der Schraubenkopf versenkt mit der Verkleidungsoberfläche abschliessen.

Die Aufgabe wurde durch eine Schraube S , mit einem im Schraubenkopf 2 versenkten Schraubenimbus 3 gelöst, die aus einem Schraubenoberteil b und einem, gegenüber dem Schraubenteil b verjüngten Schraubenunterteil a besteht und die Schraube S zur Befestigung und Fixierung von Objekten untereinander, auf Distanz, bestimmt ist und die Objekte bestehen aus einem Eindringgegenstand 6 ,sowie einem zu befestigenden Suplementärgegenstand 5 , wobei die Schraube S auf der ganzen Länge in den Bereichen a und b die gleiche Gewindesteigung besitzt, wobei die Gewindesteigung sich an der bestehenden Gewindesteigungsart, wie für Metalle üblich, orientiert und das Gewindeprofil des Gewindes 12 des Schraubenoberteils b der Schraube S vertieft ausgeprägt ist, wodurch, durch die Drehbewegung beim Einschrauben der Schraube S , der Schraubenbereich b sich in das Material des Gegenstandes 5 derart stark einwindet, dass eine Verankerung des Schraubenteils b mit dem Gegenstand 5 erfolgt, die hohen Ausreisswerten standhält Und gleichzeitig der untere Schraubenteil a sich in den Eindringgegenstand 6 einschneidet und/oder einschraubt, wodurch ebenfalls eine exakte und feste Verbindung zwischen dem Schraubenteil a und dem Gegenstand 6 entsteht und beide Gewindeteile A und b eine Gewindeschneidkerbung besitzen, was es ermöglicht, dass die Schraube S in die vorgebohrten Montagelöcher der Gegenstände 5 und 6 eindringt, ohne dass in den Montagelöchern ein Gewinde vorgeschnitten ist.

Die Funktionsweise der neuen Schraube wird gemäss der Aufgabe der Erfindung des weiteren noch dadurch zum Ausdruck gebracht,dass die Schraube S im oberen Schraubenteil b,zu Beginn des erweiterten Durchmessers,sowie im unteren Schraubenteil a, ab dem Schraubenende, auf der Distanz von jeweils 6 bis 16 Windungen des Gewindes, mindestens eine achsiale,schlitzartige Einkerbung besitzt, die auf deren Drehrichtungsseite derart scharfkantig ausgebildet ist und im Falle des Schraubenteils a asymetrisch gemäss R angeordnet ist, dass die Einkerbungskante Gewindeschneideigenschaften besitzt, wodurch bei Montagelöchern ohne vorgeschnittenem Gewinde, die Schraube S während dem Einschrauben in die Lochungen der Montagegenstände, die Funktionen, des Gewindeschneidens, des Distanzfixierens und der stabilen Verbindung der Montagegegenstände erfüllt.

Falls der Eindringgegenstand 6 ein Metalldübel 4 ist, der beispielsweise in Beton eingesetzt wurde, kommt eine Schraubenvariante S₁ in Frage, die keine Gewindeschneidauskerbungen besitzt, sonst aber alle Merkmale der Schraube S, bezüglich der Gewindegestaltung aufweist.

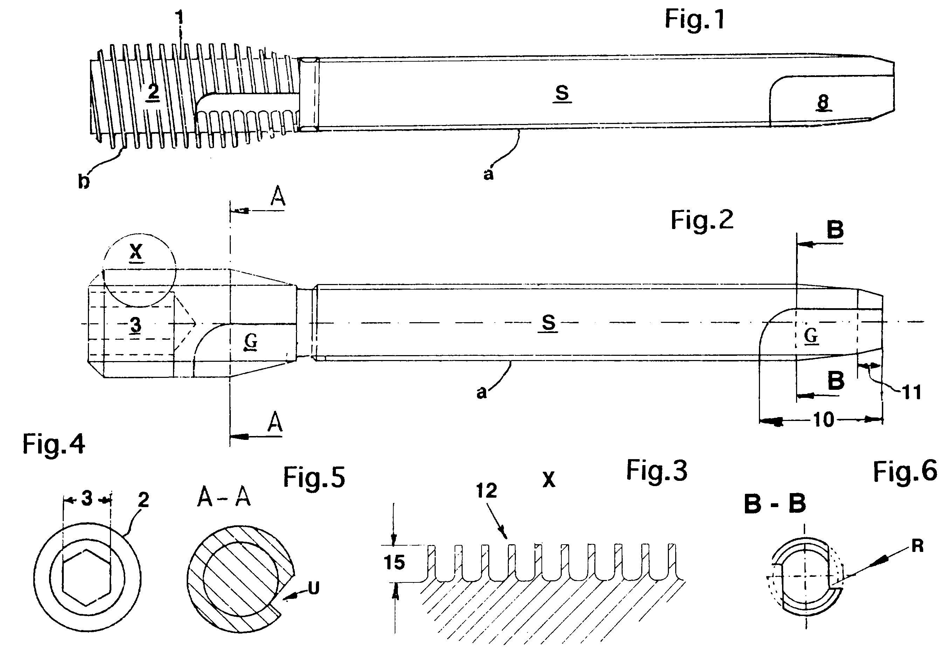

Der Erfindungsgegenstand wird anhand der nachfolgenden Figurenabhandlung beispielhaft beschrieben. Die Figuren 1 bis 12 zeigen;
- Fig. 1 -: die erfinderische Schraube S, mit dem unteren , verjüngten Schrauben bereich a und dem oberen Schraubenbereich b, mit dem vertieften Gewinde-Windungsprofil 1 und integriertem Schraubenkopf 2, mit inliegendem Schraubimbuss 3,
- Fig. 2 -: die gleiche Schraube mit besser dargestellten Gewindeschneidausfräsungen G und deren Schnittsituierungen A-A und B-B und dem Ausschnitt X, zur Detailderstellung des Gewindeprofils 1,
- Fig. 3 -: den Ausschnitt X der Fig.2 mit der vergrösserten Detaildarstellung des vertieften Gewinde-Windungsprofils 1,
- Fig. 4 -: den Schraubenkopf 2, mit Sechskantimbuss 3,
- Fig. 5 -: den Schnitt A-A, gemäss Fig.2, mit der Detaildarstellung der Gewindeschneidkante **U** im oberen Schraubenbereich b,
- Fig. 6 -: den Schnitt B-B, gemäss Fig.2, mit der Detaildarstellung der Gewinde-Schneidkante **R** im unteren Schraubenbereich a,
- Fig. 7 -: einen Metalldübel 4, bei der Verwendung als Eindringgegenstand 6,
- Fig. 8 -: die Schraube **S**_{**1**} in der Variante ohne Gewindeschneidausfräsungen, für Anwendungen, wenn der Eindringgegenstand 6, beispielsweise ein Metalldübel 4 ist, mit gleichem Konterpartinnengewinde 25, passend zum Gewinde 7 des Schraubenbereichs a,
- Fig. 9 -: die Schraube S gemäss der Fig.8, montiert im Metalldübel 4, der in Beton befestigt ist,
- Fig. 10 -: ein Montagebeispiel mit Montagelochbohrungen mittels einem Zweistufenbohrer 23,
- Fig. 11 -: ein Montagebeispiel eines fertig montierten Systems unter Anwendung der Schraube S, unter Einsatz eines Eindringgegenstandes 6 aus Stahl und eines Komplementärgegenstandes 5 aus laminiertem Pressholz.
- Fig. 12 -: den erfinderischen Dübel S in perspektivistischer Darstellung.

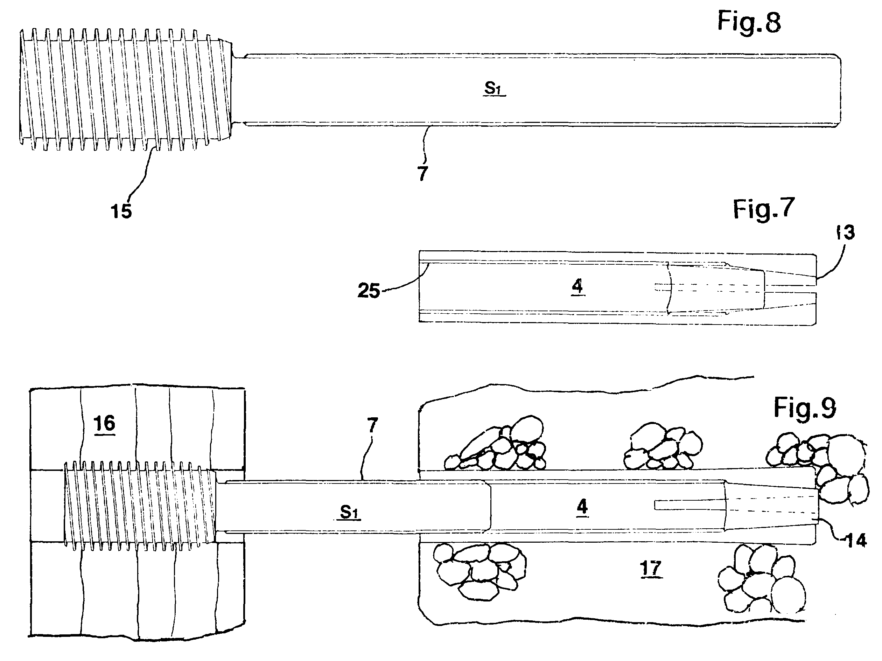

Das folgende Beschreibungsbeispiel demonstriert den Montagevorgang bei der Montage einer Raumdeckenverkleidung unter Anwendung der Schraube S₁ und eines Metalldübels als Eindringgegenstand 6, in Anlehnung an die Fig. 7 bis 9.

Im Falle, dass der Eindringgegenstand 6 ein Metalldübel 4 mit Innengewinde ist, sind nivelierende Distanzmontagen, zum Beispiel, von Unterkonstruktionen, die aus Holz, Metall oder anderen Materialien bestehen können, auf die anschliessend ein Endprodukt, wie Profilholzbretter, montiert wird, möglich. Eine beispielsweise derartige Anwendung ist die nivelierende Befestigung einer Unterkonstruktion, gegebenenfalls aus Holz, bei Raumdeckenverkleidungen.
Die Metalldübel 4, gemäss dem Feuerfeststandard, werden als Eindringgegenstand 6, in einem solchen Falle in Bohrlöchern der Betondecke befestigt. Die Schraube S₁ wird durch die vorgebohrten Löcher der Unterkonstruktion in den Dübel geschraubt, wobei der Schraubenbereich b mit der Holzunterkonstruktion verankert wird. In Abhängigkeit von der erforderlichen Nivelierdistanz, wird die Schraube S₁ mehr oder weniger tief in den Dübel geschraubt.

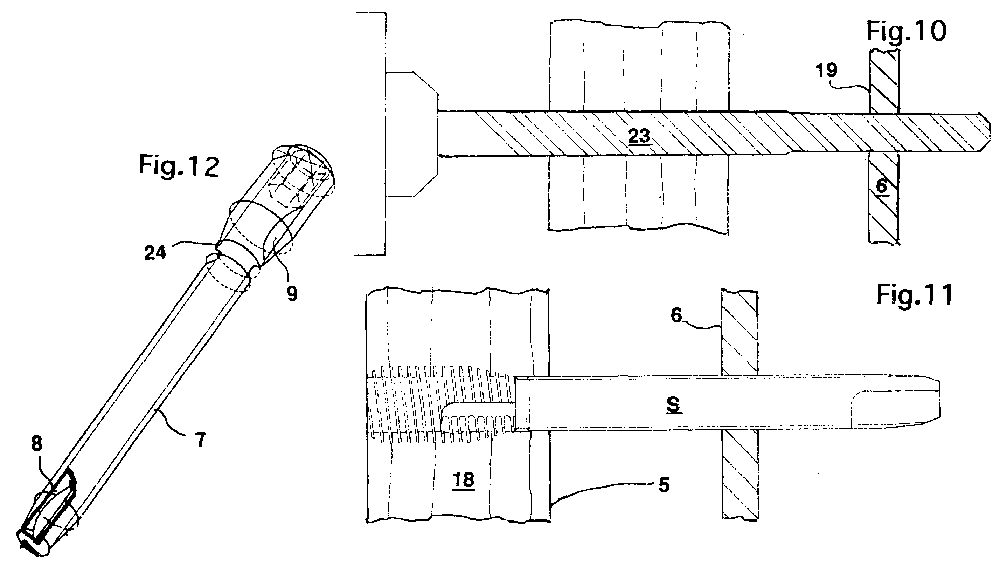

Fig. 7 zeigt den Metalldübel 4 im Normalzustand mit geschlossenen Spreizbacken 13.
Fig. 8 zeigt die Montageschraube S₁ für diese spezielle Anwendung, ohne Gewinde schneidkerbungen, jedoch mit dem Sondergewinde 15 im Schraubenbereich b.
Fig. 9 zeigt den Zustand nach der Montage einer Holz-Unterkonstruktion 16 auf Distanz zum Eindringgegenstand 6, in diesem Falle dem Metalldübel 4, mit gespreizten Spreitzbacken 14, innerhalb des Betoneindringmaterials 17.
Die geschilderte Montageart unter der Verwendung von Metallmontagesystemen, hat zudem den weiteren Vorteil, dass sie der Verodnung betreffend der Feuerfestverankerung im Eindringmaterial entspricht.
Die beispielhafte Montage eines Komplementärgegenstandes 5, bestehend aus einer 19 mm dicken Verbundpressholzplatte aus Multiplexmaterial 18, wird mittels der Figuren 10 und 11 demonstriert.
Der Eindringgegenstand 5 ist hier eine Stahlunterkonstruktion 19. Das Verkleidungsmaterial 18 , eine Multiplexplatte, wird auf die gewünschte Distanz zur Stahlunterkonstruktion 19 positioniert. Danach wird mittels einem Zweistufenbohrer 23, in einem Schritt der Eindringgegenstand und der Verkleidungsgegenstand durchbohrt, wobei Bohrlöcher der differenten Durchmesser entstehen, angepasst an die Durchmesser der verwendeten, erfinderischen Distanzmontageschrauben S.
Das folgende Beispiel betrifft Ausreissvergleichstests der erfinderischen Schraube, im Vergleich mit Schrauben der bisherigen konventionellen Anwendung, wobei, die Vergleichsschraube 21 mit koncavem Versenkschraubenkopf bevorteilt ist, da der Schraubenkopf breiter als das Montagebohrloch ist.

### Beispiel

Die nachfolgenden Ausführungen stellen beispielhaft, auf der Basis der getesteten Vergleichsschrauben, des Standes der Technik sowie der erfinderischen Schraube, die Vergleichs-Ausreisswerte dar.

### VERSUCHSDURCHFÜHRUNG

Die Testschrauben werden in eine 19 mm dicke Multiplex(Pressholzschicht)-Platte, mit vorgebohrtem Schraubeneinsteckloch so eingeschraubt, dass der Schraubenkopf jeweils niveaugleich mit der Oberfläche der Multiplex-Platte abschliesst. Auf das jeweilige Schraubenende wird eine Schraubenmutter aufschraubt, an welche das Zugwerkzeug angehängt und an die Testmaschine angeschlossen wird. Die Ausreisstests werden per Zugversuch durchgeführt. Im Vergleichstest wurden getestet:
- 20 -: die erfinderische Schraube - die mit dem Kopfgewinde in das Testmaterial (Multiplex) eingewindet ist,
- 21 -: eine Schraube mit koncavem Schraubenkopf - deren Kopfende über den Lochdurchmesser des vorgebohrten Loches hinausragt und deshalb einen extrem höheren Ausreisswert aufweisen sollte,
- 22 -: eine sogenannte Insertschraube - mit einem entsprechend grossen Gewindekopf, der ebenfalls einen vergleichsweise hohen Ausreisswert aufweisen sollte.

Die spezifischen Testbedingungen waren wie folgend;
- Messungen jeweils: : F - S
- Lo: : 0,000 mm
- Vβ: : 3,000 mm

| Messergebnisse: | Messungen | | |
|---|---|---|---|
| Probenbezeichnung | 20 | 21 | 22 |
| | F in KN | | |
| Versuch 1 | 3,99 | 4,03 | 2,91 |
| Versuch 2 | 3,35 | 4,14 | 2,75 |
| Mittel | 3,67 | 4,08 | 2,83 |

### ZUSAMMENFASSUNG

Die Ausreissergebnisse der neuen Schraube liegen über den Erwartungen und übertreffen die Werte der vergleichbaren Insertschraube,die ebenfalls keinen auskragenden Schraubenkopf besitzt, deutlich, prozentual gerechnet um 30%.

In den tabellarisch dargestellten Diagrammen, werden die Versuchsergebnisse im Detail dargestellt.

Die erfinderische Schraube leistet einen erheblichen Beitrag zur Fortentwicklung des technischen Fortschritts und erforderte einen hohen erfinderischen Aufwand. Insbesondere wird unter der Verwendung der neuen Schraube Material und Montagezeit eingespart.
Die diesbezüglichen Vorteile können wie folgend spezifiziert werden;
a - wegen des Wegfallens einer Zugschraubenmutter während der Distanzmontage wird Material eingespart, was von ökologischem Vorteil ist,
b - Durch das gleichzeitige Gewindeschneiden im Eindringgegenstand 6, Fixieren der Montagedistanz zwischen dem Eindringgegenstand 6 und dem Komplementärgegenstand 5 und der Verbindung der genannten Gegenstände mittels Drehschraubung über den Schraubenimbuss 3 des Schraubenkopfes 2, statt der Zugverspannung mittels einer Schraubenmutter, resultiert eine derartige Montage-Zeitersparnis, dass der Herstellungsaufwand der anspruchsvollen Schraube S, der auf Automaten erfolgt, weit überkompensiert wird.
c - es wird das sogenannte Aufhölzelmaterial eingespart, das ansonsten verloren ist, da es zur Distanzhaltung zwischen den Montagegenständen, bei konventioneller Schraubenmutter-Montage, verbleibt.

Hauptanwendungsgebiete der neuen Schraube sind die Bereiche des Baus, von Transportmitteln, der Verkleidungen und der Dekoration.

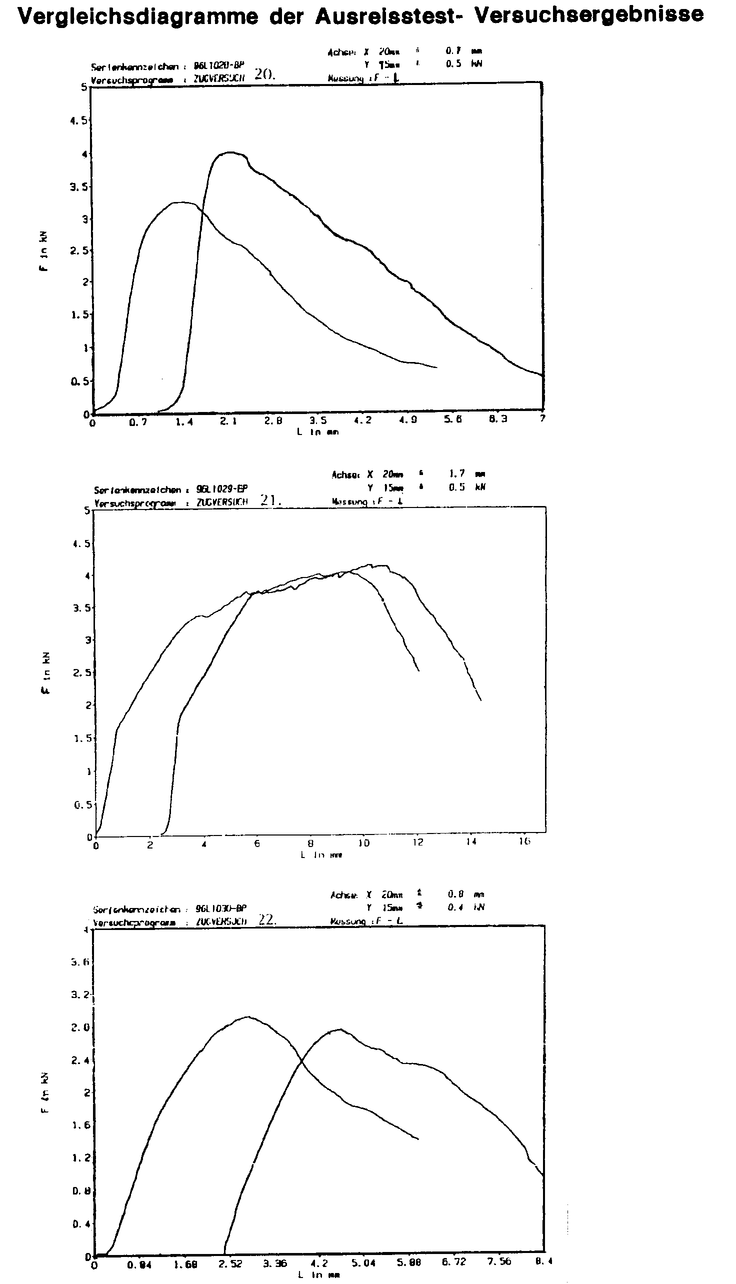

### Positionszahlenliste - List of reference numbers

- 1: Gewinde-Windungsprofil
- 2: Schraubenkopf
- 3: Schraubenimbuss
- 4: Metalldübel
- 5: Eindringgegenstand
- 6: Komplementärgegenstand
- 7: Gewinde des Bereichs a
- 8: Gewindeschneidauskerbung im Schraubenbereich a
- 9: Gewindeschneidauskerbung im Schraubenbereich b
- 10: Auskerbungsdistanz der Gewindeschneidauskerbungen
- 11: Schraubenführungsfußtiefe im Schraubenbereich a
- 12: Gewindewindungen gemäss Ausschnitt X
- 13: Dübel 4 mit geschlossenen Spreizbacken
- 14: Dübel 4 mit gespreizten Spreizbacken
- 15: Gewindehöhenprofil der Schraube S im Gewindebereich b
- 16: Holzunterkonstruktion
- 17: Beton als Eindringgegenstand 6
- 18: Multiplex - Pressholz als Komplementärgegenstand 5
- 19: Stahlunterkonstruktion als Eindringgegenstand 6
- 20: Erfinderische Schraube im Ausreisstest-Beispiel
- 21: Schraube mit koncavem Schraubenkopf im Ausreisstest-Beispiel
- 22: Insertschraube im Ausreisstest-Beispiel
- 23: Zweistufenbohrer
- 24: Einmuldung zum Gewindeansatz des Gewindes
- 25: Konterpartinnengewinde
- S: Erfinderische Schraube
- S₁: Erfinderische Schraubenvariante
- a: Schraubenunterteil
- b: Schraubenoberteil
- U: Schneidkante der Gewindeschneideinkerbung im Bereich b
- R: Schneidkante der Gewindeschneidkerbung im Bereich a
- X: Ausschnitt des speziellen Gewindes 12 mit dem Gewindeprofil 15
- G: Gewindeschneidausfräsungen

## Patentansprüche

1. eine Schraube (S) ,mit einem im Schraubenkopf (2) versenkten Schraubenimbus (3), die aus einem Schraubenoberteil (b) und einem gegenüber dem Schraubenteil (b) verjüngten Schraubenunterteil(a) besteht und die Schraube (S) zur Befestigung und Fixierung von Objekten untereinander, auf Distanz, bestimmt ist und die Objekte bestehen aus einem Eindringgegenstand (6), sowie einem zu befestigenden Suplementärgegenstand (5),
wobei die Schraube (S) auf der ganzen Länge in den Bereichen
(a) und (b) die gleiche Gewindesteigung besitzt und die Gewindesteigung sich an der bestehenden Gewindesteigungsart,wie für Metalle üblich, orientiert und das Gewindeprofil des Gewindes (12) des Schraubenoberteils (b) der Schraube (S) vertieft ausgeprägt ist, wodurch, durch die Drehbewegung beim Einschrauben der Schraube (S),der Schraubenbereich (b) sich in das Material des Gegenstandes (5) derart stark einwindet, dass eine Verankerung des Schraubenteils (b) mit dem Gegenstand (5) erfolgt,die hohen Ausreisswerten standhält und sich gleichzeitig der untere Schraubenteil (a) in den Eindringgegenstand (6) einschneidet und/oder einschraubt, wodurch ebenfalls eine exakte und feste Verbindung zwischen dem Schraubenteil (a) und dem Gegenstand (6) entsteht und beide Gewindeteile (a) und (b) eine Gewindeschneidkerbung besitzen, was es ermöglicht, dass die Schraube (S) in die vorgebohrten Montagelöcher der Gegenstände (5) und (6) eindringt, ohne dass in den Montagelöchern ein Gewinde vorgeschnitten ist.

2. Schraube nach Anspruch 1,dadurch gekennzeichnet, dass die Schraube (S) im oberen Schraubenteil (b),zu Beginn des erweiterten Durchmessers, sowie im unteren Schraubenteil (a), ab dem Schraubenende, auf der Distanz von jeweils 6 bis 16 Windungen des Gewindes, mindestens eine achsiale, schlitzartige Einkerbung besitzt, die auf deren Drehrichtungsseite derart scharfkantig ausgebildet ist und im Falle des Schraubenteils (a) asymetrisch gemäss (R) angeordnet ist, dass die Einkerbungskante Gewindeschneideigenschaften besitzt, wodurch bei Montagelöchern ohne vorgeschnittenem Gewinde, die Schraube während dem Einschrauben in die Lochungen der Montagegenstände die Funktionen, des Gewindeschneidens, des Distanzfixierens und der stabilen Verbindung der Montagegegenstände erfüllt.

3. Schraube nach Anspruch 1, in der Variante (S₁) ohne Gewindeschneideineinkerbungen, für Anwendungen im Bereich der Eindringgegestände (6) mit passendem Verbund zum Schraubenbereich (a).

4. Schraube nach den Ansprüchen 1 und 3, dadurch gekennzeichnet, dass der Eindringgegenstand (6) ein Metalldübel (4) ist.

5. Anwendung der Schraube, gemäss Anspruch 1, im Bereich des Baus von Transportfahrzeugen, der Verkleidungen und der Dekoration.
